(19) Europäisches Patentamt

European Patent Office

Office européen des brevets

(11) Veröffentlichungsnummer: **0 002 458**
**B1**

(12) **EUROPÄISCHE PATENTSCHRIFT**

(21) Anmeldenummer: **78101442.8**

(22) Anmeldetag: **23.11.78**

(51) Int. Cl.³: **C 08 J 9/42, C 08 L 13/02, C 08 K 3/22**

(54) Schwerentflammbarer Polyurethanschaum und ein Verfahren zu seiner Herstellung.

(30) Priorität: **06.12.77 DE 2754313**

(43) Veröffentlichungstag der Anmeldung:
**27.06.79 Patentblatt 79/13**

(45) Bekanntmachung des Hinweises auf die Patenterteilung:
**25.03.81 Patentblatt 81/12**

(84) Benannte Vertragsstaaten:
**BE DE FR GB NL SE**

(56) Entgegenhaltungen:
**DE - A - 2 649 222**
**DE - B - 1 103 569**
**GB - A - 925 513**
**GB - A - 977 929**
**GB - A - 1 076 130**
**US - A - 3 728 206**

(73) Patentinhaber: **BAYER AG**
**Zentralbereich Patente, Marken und Lizenzen**
**D-5090 Leverkusen 1, Bayerwerk (DE)**

(72) Erfinder: **Esser, Heinz, Dr.**
**Am Jungholzkamp 7**
**D-5093 Burscheid (DE)**
(72) Erfinder: **Illger, Hans Walter, Dr.**
**Im Tentefeld 27**
**D-5064 Roesrath (DE)**
(72) Erfinder: **Müller, Heinz, Dr.**
**Feldsieferweg 1**
**D-5090 Leverkusen 3 (DE)**
(72) Erfinder: **Kost, Willi**
**Duennwalder Mauspfad 376**
**D-5000 Köln 80 (DE)**
(72) Erfinder: **Gonzalez-Dörner, Alberto Carlos**
**Koernerstrasse 4**
**D-5090 Leverkusen 1 (DE)**

Courier Press, Leamington Spa, England.

# 0 002 458

## Schwerentflammbarer Polyurethanschaum und ein Verfahren zu seiner Herstellung

Die vorliegende Anmeldung betrifft schwerentflammbaren Polyurethanschaum und ein Verfahren zu seiner Herstellung durch Behandeln mit einer Mischung aus einem Carboxyl-gruppen-haltigen Polychloroprenlatex und Aluminiumhydroxid und Vernetzung des Latex mit Zinkoxid oder Magnesiumoxid.

Aus der britischen Patenschrift 977 929 ist es bereits bekannt, die Entflammbarkeit von Schaumstoffen ans Polyurethanen· oder Vinylpolymerisaten durch Behandeln mit vulkanisierbaren Elastomerlatices herabzusetzen. Die Vulkanisation erfolgt in üblicher Weise mit Schwefel unter Zusatz der bekannten schwefelhaltigen Vulkanisationsbeschleuniger. Nachteilig ist die verhältnismäßig hohe Vulkanisationstemperatur, die zu einer Beeinträchtigung der Eigenschaften des Schaumstoffs führen kann. Es hat sich auch gezeigt, daß die Verringerung der Entflammbarkeit durch schwefelvernetzte Elastomerlatices nicht in allen Fällen zufriedenstellend ist.

In der DE—OS 2 649 222 wird ein Verfahren vorgeschlagen, bei dem anorganische flammhemmende Zusätze wie Magnesiumcarbonat oder Aluminiumoxidhydrat mit Hilfe von Elastomerlatices in einen Schaumstoff, 2,B, Polyurethanschaum, eingebracht werden, um ihn schwerer entflammbar zu machen. Auch bei·diesem Verfahren werden nach der Imprägnierung des Schaumstoffs die Latices mit Schwefel vernetzt, was mit den oben erwähnten Nachteilen verbunden ist.

Es wurde nun gefunden, daß schwerentflammbare Polyurethanschäume erhalten werden, wenn diese mit einer Mischung aus einem Carboxylgruppen-haltigen Polychloroprenlatex und Aluminiumhyroxid behandelt werden und der Latex mit Zinkoxid oder Magnesiumoxid vernetzt wird.

Aus der DE—AS 1 103 569 ist es bekannt, daß Mischpolymerisate von Chloropren einer ungesättigten Carbonsäure und mindestens einem weiteren Monomeren mit Metalloxiden vernetzt werden können. Wie dort gezeigt wird, werden jedoch mit Polymerisaten die nur aus Chloropren und z.B. Methacrylsäure aufgebaut sind, mit Metalloxiden keine reproduzierbaren Vernetzungen erhalten. Der Fachmann mußte daher erwarten, daß entsprechende mit Metalloxiden zu vernetzende Latices zur Flammfestausrüstung von Polyurethanschaum nicht geeignet sein würden. Überraschenderweise ist dies jedoch der Fall, wie das Beispiel der vorliegenden Erfindung zeigt.

Gegenstand der Erfindung ist ein schwerentflammbarer Polyurethanschaum erhalten durch teilweises oder vollständiges Imprägnieren oder Beschichten eines Polyurethanschaums mit einer Mischung aus einem vernetzbaren Elastomerlatex und einem flammhemmenden Additiv und Vernetzen des Latex durch Erhitzen, dadurch gekennzeichnet, daß die Mischung besteht aus

a) einem Latex eines Copolymerisats aus

   1) 99 bis 93 Gew.-% Chloropren und

   2)   1 bis 7 Gew.-% Acrylsäure und/oder Methacrylsäure,

b) der 1-bis 5-fachen Gewichtsmenge an Aluminiumhydroxid, bezogen auf Feststoffgehalt des Latex, und

c) 5 bis 15 Gew.-Teile Zinkoxid oder Magnesiumoxid, bezogen auf 100 Gew.-Teile Kautschuktrockensubstanz

sowie ein Verfahren zur Herstellung eines derartigen Polyurethanschaums.

Nach dem Verfahren kann sowohl ungeformter als auch geformter Polyurethanschaum behandelt werden. Es ist bevorzugt, das Verfahren auf Fertigteile aus Polyurethanschaum anzuwenden.

Die erfindungsgemäss zur Imprägnierung verbendeten Carboxylgruppen-haltigen Chloroprenpolymeren sind Copolymere aus 99 bis 93, vorzugsweise 97 bis 95 Gew.-% Chloropren und Acrylsäure und/oder Methacrylsäure. Sie enthalten 1 bis 7, vorzugsweise 3 bis 5, Gew.-% an einpolymerisierten Carbonsäureeinheiten. Diese Elastomeren werden in Form ihrer Latices mit einem Feststoffgehalt von 30 bis 70, vorzugsweise 40 bis 60 Gew.-% eingesetzt. Daneben können die Latices geringe Mengen üblicher Zusätze wie z.B. Methylcellulose enthalten. Zur Herstellung der für die Imprägnierung geeigneten Mischung wird in einen derartigen Polychloroprenlatex die 1- bis 5-fache, bevorzugt die 1- bis 2-fache, Gewichtsmenge, bezogen auf den Feststoffgehalt des Latex, an Aluminiumhydroxid eingearbeitet, Um die Einarbeitung des Aluminiumhydroxids zu erleichtern und die Stabilität des Latex zu erhalten, werden dabei im allgemeinen 5 bis 10 Gew.-% geeigneter oberflächenaktiver Substanzen, wie z.B. äthoxylierte Alkylphenole und/oder sulfierte Netzmittel wie Alkylsulfonate mitverwendet. Um eine zu starke Schaumbildung zu vermeiden, können außerdem Silikonölemulsionen zugesetzt werden.

Zusätzlich zu Aluminiumhydroxid können dem Latex such noch andere flammhemmende Verbindungen, z.B. Halogenkohlenwasserstoffe, wie Pentabromtoluol oder Antimontrioxid in Mengen von 5 bis 30 Gew.-% zugesetzt werden. Antimontrioxid ist besonders geeignet, die flammhemmende Wirkung des Gemischs aus Polychloropren und Aluminiumhydroxid zu verstärken, da aus ihm im Brandfalle das ebenfalls flammhemmende Antimonylchlorid entsteht.

Als weiterer Bestandteil enthält die Imprägnierungsmischung Magnesiumoxid oder Zinkoxid, die z.T. als Vernetzer für das Elastomere dienen. Der Vernetzer ist in der Mischung in einer Menge von 1 bis 3 Mol, vorzugsweise von 1,5 bis 2,5 Mol, enthalten, bezogen auf 1 Mol Carboxylgruppen des Polychloroprens. Insgesamt enthält die Mischung 5—15, bevorzugt 7,5—10 Gew.-Teile Zinkoxid oder Magnesiumoxid, bezogen auf 100 Gew.-Teile Kautschuktrockensubstanz.

Außer den bisher genannten Bestandteilen der Mischung kann diese noch weitere Zusätze wie z.B. Pigmente oder Alterungsschutzmittel enthalten. Selbstverständlich müssen die Bestandteile der Mischung insgesamt miteinander verträglich sein und dürfen sich in ihrer Wirkung nicht beeinträchtigen.

Die Mischung zur Behandlung des Polyurethanschaums, die aus einem Polychloroprenlatex durch Zugabe der obengenannten Bestandteile erhalten wird, liegt, in Form einer Dispersion oder Suspension vor, mit einem Festsoffgehalt von 40 bis 80, vorzugsweise von 60 bis 70 Gew.-%. Die Menge der Mischung, mit der der zu imprägnierende Schaumstoff behandelt wird, richtet sich im wesentlichen nach den Anforderungen hinsichtlich des Brandverhaltens, die der behandelte Schaumstoff später erfüllen muß. Im allgemeinen wird der Schaumstoff mit einer solchen Menge, d.h. der 0,1- bis 8-fachen Menge, der Mischung behandelt, daß seine Feststoffaufnahme 10 bis 800%, vorzugsweise 15 bis 350%, des ursprünglichen Schaumstoffgewichts beträgt. Der Schaumstoff kann entweder vollständig oder teilweise, z.B. nur in der Oberfläche, imprägniert werden. Für eine vollständige Imprägnierung wird der Schaumstoff mit der Mischung getränkt, z.B., indem man ihn darin eintaucht und einen Überschuß der Mischung durch Abquetschen entfernt. Falls nur eine Imprägnierung der Oberfläche beabsichtigt ist, kann die Mischung auch durch Sprühen in den Schaumstoff eingebracht werden. Ferner ist eine Behandlung auch durch Beschichtung oder Einsaugen der Mischung mittels Unterdruck möglich.

Nach der Behandlung wird die im Schaumstoff enthaltene Feuchtigkeit durch Trocknen bei erhöhter Temperatur entfernt und gleichzeitig das in den Schaumstoff eingebrachte Elastomere vernetzt. Es ist ein besonderer Vorteil des erfindungsgemäßen Verfahrens, daß die Vernetzung des Elastomeren bereits bei den für die Trocknung ausreichenden Temperaturen erfolgt, d.h. bei etwa 100°C oder wenig darüber. Die thermische Belastung des Schaumstoffs bei der Vernetzung kann dadurch sehr klein gehalten werden. Überraschenderweise wird trotz der verhältnismäßig niedrigen Temperatur für die Vernetzung nicht mehr, sondern häufig weniger Zeit benötigt als bei der bisher üblichen Schwefelvulkanisation.

Das erfindungsgemäße Verfahren hat darüber hinaus den Vorteil, daß die Verwendung der bisher notwendigen Vulkanisationsbeschleuniger entfällt, die häufig zu Geruchsbelästigungen führten und beim Verbrennen giftige Gase abspalten. Hinzu kommt, daß der bei dem vorliegenden Verfahren eingesetzte Carboxylgruppen-haltige Latex pH-neutral ist und daher mit den anderen Bestandteilen der Mischung leichter verträglich ist als die bisher üblichen alkalischen, schwefelvernetzbaren Latices. Insgesamt erlaubt das erfindungsgemäße Verfahren eine schonendere, schnellere und kostengünstigere Herstellung von schwerentflammbaren Schaumstoffen.

Das forgende Beispiel erläutert die Erfindung:

## Beispiel

Ein Polyetherurethanschaum wurde erfindungsgemäß mit einer Mischung imprägniert bzw. beidseitig besprüht, die aus folgenden Bestandteilen in Form einer Dispersion gebildet wurde:

200 g eines 50 gew.-%igen Latex eines Copolymeren aus 96 Gew.-% Chlopren und 4 Gew.-% Methacrylsäure; 3,3 g einer 33 gew.-%igen wäßrigen Dispersion von styrolmodifiziertem Diphenylamin; 164,5 g einer 1 gew.-%igen wäßrigen Lösung von Methylcellulose; 125,0 g Aluminiumhydroxid; 15,0 g Pentabromtoluol; 10,0 g Zinkoxid, aktiv; 15,0 g einer 20 gew.-%igen wäßrigen Lösung eines Polyglykolethers aus 1 Mol Nonylphenol und ca. 10 Mol Ethylenoxid.

Die zum Sprühen verwendete Mischung enthielt außerdem 2,0 g eines organischen Rotpigments, suspendiert in 2,0 g Wasser, während die zur Imprägnierung verwendete Mischung zusätzlich 3,0 g einer Silikonölemulsion (Polysiloxanmethylether) und 2,0 g Ruß, suspendiert in 2,0 g Wasser enthielt.

Der Schaum wurde nach der Imprägnierung 45 Minuten bei 130°C bzw. nach der Besprühung beider Seiten jeweils 5 Minuten bei 130°C getrocknet. In Tabelle 1 sind die mechanischen Eigenschaften und in Tabelle 2 das Brandverhalten des ungehandelten (I), besprühten (II) und imprägmierten (III) Schaumstoffes wiedergegeben.

## TABELLE 1

| Eigenschaften | I | II | III |
|---|---|---|---|
| Rohdichte [kg/m³] | 17 | 35 | 54 |
| Zugfestigkeit [KPa] | 75 | 110 | 90 |
| Bruchdehnung [%] | 135 | 145 | 200 |
| Stauchhärte [KPa] | 1,8 | 2,5 | 3,3 |

**0 002 458**

TABELLE 2

| Brandverhalten (nach ASTM D 1692—74) | I | II | III |
|---|---|---|---|
| Brenndauer, 125 mm-Marke [sec] | 27 | — | — |
| Brennlänge [mm] | — | 36 | 27 |
| Brenndauer [sec] | — | 44 | 28 |
| Verhalten | tropft, fällt ab; brennend | verkohlt | verkohlt |

Die Versuchsergebnisse zeigen, daß durch das erfindungsgemäße Verfahren ein deutlich schwerer entflammbarer Schaumstoff erhalten wird.

## Patentansprüche

1. Schwer ertflammbarer Polyurethanschaum erhalten durch teilweises oder vollständiges Imprägnieren oder Beschichten eines Polyurethanschaums mit einer Mischung aus einem vernetzbaren Elastomerlatex und einem flammhemmenden Additiv und Vernetzen des Latex durch Erhitzen, dadurch gekennzeichnet, daß die Mischung besteht aus

a) einem Latex eines Copolymerisats aus
   1) 99 bis 93 Gew.-% Chloropren und
   2) 1 bis 7 Gew.-% Acrylsäure und/oder Methacrylsäure,

b) der 1- bis 5-fachen Gewichtsmenge an Aluminiumhydroxid, bezogen auf Feststoffgehalt des Latex, und

c) 5 bis 15 Gew.-Teile Zinkoxid oder Magnesiumoxid, bezogen auf 100 Gew.-Teile Kautschuktrockensubstanz.

2. Polyurethanschaum gemäß Anspruch 1, dadurch gekennzeichnet, daß dem Latex zusätzlich 5 bis 30 Gew.-% eines Halogenkohlenwasserstoffs oder Antimon-III-oxid zugesetzt worden sind.

3. Polyurethanschaum gemäß Anspruch 1 oder 2, dadurch gekennzeichnet, daß seine Feststoffaufnahme an Mischung 10 bis 800% des ursprünglichen Schaumstoffgewichts beträgt.

4. Verfahren zur Herstellung eines schwerentflammbaren Polyurethanschaums gemäß Anspruch 1, dadurch gekennzeichnet, daß ein Polyurethanschaum mit einer Mischung aus

a) einem Latex eines Copolymerisats aus
   1) 99 bis 93 Gew.-% Chloropren und
   2) 1 bis 7 Gew.-% Acrylsäure und/oder Methacrylsäure,

b) der 1- bis 5-fachen Gewichtsmenge an Aluminiumhydroxid, bezogen auf Feststoffgehalt des Latex, und

c) 5 bis 15 Gew.-Teile Zinkoxid oder Magnesiumoxid, bezogen auf 100 Gew.-Teile Kautschuktrockensubstanz,

teilweise oder vollständig imprägniert oder beschichtet und der Latex durch Erhitzen vernetzt wird.

5. Verfahren nach Anspruch 4, dadurch gekennzeichnet, daß dem Latex zusätzlich 5 bis 30 Gew.-% eines Halogenkohlenwasserstoffs oder Antimon-III-oxid zugesetzt werden.

6. Verfahren nach Anspruch 4, dadurch gekennzeichnet, daß der Polyurethanschaum mit der 0,1- bis 8-fachen Menge der Mischung, berechnet als Feststoffe, imprägniert oder beschichtet wird.

7. Verfahren nach Anspruch 4, dadurch gekennzeichnet, daß die Imprägnierung oder Beschichtung des Polyurethanschaums durch Besprühen mit der Mischung erfolgt.

## Revendications

1. Mousse de polyuréthane difficilement inflammable, obtenue par imprégnation partielle ou totale ou par couchage d'une mousse de polyuréthane avec un mélange d'une latex élastomère

4

réticulable et d'un additif ignifugeant et par réticulation du latex par chauffage, caractérisée en ce que le mélange consiste en

a) un latex d'un copolymère à
1) 99 à 93% en poids de chloroprène et à
2)  1 à 7% en poids d'acide acrylique et/ou d'acide méthacrylique,

b) 1 à 5 fois la quantité en poids d'hydroxyde d'aluminium par rapport à la teneur en matière sèche ou solide du latex et

c) 5 à 15 parties en poids d'oxyde de zinc ou d'oxyde de magnésium pour 100 parties en poids de substance sèche de caoutchouc.

2. Mousse de polyuréthane selon la revendication 1, caractérisée en ce qu'on a ajouté au latex en supplément 5 à 30% en poids d'un hydrocarbure halogéné ou d'oxyde d'antimoine-III.

3. Mousse de polyuréthane selon l'une quelconque des revendications 1 et 2, caractérisée en ce que son absorption de matière sèche du mélange représente 10 à 800% du poids de la matière mousse initiale.

4. Procédé de fabrication d'une mousse de polyuréthane difficilement inflammable selon la revendication 1, caractérisé en ce qu'on imprègne partiellement ou complètement ou enduit une mousse de polyuréthane avec un mélange

a) d'un latex d'un copolymère à
1) 99 à 93% en poids de chloroprène et à
2)  1 à 7% en poids d'acide acrylique et/ou d'acide méthacrylique,

b) de 1 à 5 fois la quantité en poids d'hydroxyde d'aluminium par rapport à la teneur en matière sèche du latex et

c) de 5 à 15 parties en poids d'oxyde de zinc ou d'oxyde de magnésium pour 100 parties en poids de substance sèche de caoutchouc,

et en ce qu'on réticule le latex par chauffage.

5. Procédé selon la revendication 4, caractérisé en ce qu'on ajoute en supplément au latex 5 à 30% en poids d'un hydrocarbure halogéné ou d'oxyde d'antimoine-III.

6. Procédé selon la revendication 4, caractérisé en ce que on imprègne ou enduit la mousse de polyuréthane avec 0,1 à 8 fois la quantité de mélange, calculé en matières sèches.

7. Procédé selon la revendication 4, caractérisé en ce que l'imprégnation ou le couchage de la mousse de polyuréthane se fait par pulvérisation avec le mélange.

**Claims**

1. A flame-resistant polyurethane foam obtained by partly or completely impregnating or coating a polyurethane foam with a mixture of a cross-linkable elastomer latex and a flame-resistant additive and cross-linking the latex by applying heat, characterised in that the mixture consists of

a) a latex of a copolymer of
1) 99 to 93% by weight of chloroprene and
2)  1 to 7% by weight of acrylic acid and/or methacrylic acid,

b) aluminium hydroxide in an amount of 1 to 5 times the weight of the solid content of the latex, and

c) 5 to 15 parts by weight of zinc oxide or magnesium oxide, relative to 100 parts by weight of the dry content of rubber.

2. Polyurethane foam according to claim 1, characterised in that 5 to 30% by weight of a halogenated hydrocarbon or of antimony-III oxide have additionally been added to the latex.

3. Polyurethane foam according to claim 1 or 2, characterised in that its uptake of solid content of the mixture is 10 to 800% of the original weight of the foam.

4. Process for the production of a flame-resistant polyurethane foam according to claim 1, characterised in that a polyurethane foam is partly or completely impregnated or coated with a mixture of

a) a latex of a copolymer of
   1) 99 to 93% by weight of chloroprene and
   2) 1 to 7% by weight of acrylic acid and/or methacrylic acid,

b) aluminium hydroxide in an amount of 1 to 5 times the weight of the solid content of the latex, and

c) 5 to 15 parts by weight of zinc oxide or magnesium oxide, based on 100 parts by weight of the dry content of rubber

and the latex is cross-linked by heating.

5. Process according to claim 4, characterised in that 5 to 30% by weight of a halogenated hydrocarbon or antimony-III oxide are additionally added to the latex.

6. Process according to claim 4, characterised in that the polyurethane foam is impregnated or coated with 0.1 to 8 times its quantity of the mixture, calculated as solid content.

7. Process according to claim 4, characterised in that the impregnation or coating of the polyurethane foam is conducted by spraying the foam with the mixture.